# EUROPEAN PATENT APPLICATION

(11) **EP 4 718 187 A1**
(43) Date of publication of application: **01.04.2026**
(21) Application number: 25201736.3
(22) Date of filing: 11.09.2025
(51) Int. Cl.: G05B 19/418

(54) **METHOD AND APPARATUS FOR CONTROLLING AUTOMATIC STATION-PASSING OF YARN SPINDLE, ELECTRONIC DEVICE AND STORAGE MEDIUM**

(30) Priority: 29.09.2024 CN 202411371071
(71) Applicant: Zhejiang Hengyi Petrochemical Co., Ltd., Zhejiang 311200 (CN); Haining Hengyi New Materials Co., Ltd., Jiaxing City, Zhejiang 314415 (CN)
(72) Inventor: QIU, Yibo, Hangzhou, 311200 (CN); PENG, Xiantao, Hangzhou, 311200 (CN); JIN, Junliang, Hangzhou, 311200 (CN); WU, Zhongliang, Hangzhou, 311200 (CN); JIAN, Guorong, Hangzhou, 311200 (CN); CHEN, Donghua, Hangzhou, 311200 (CN)
(74) Representative: Bittner, Bernhard

(57) **Abstract**

Provided are a method and apparatus for controlling automatic station-passing of a yarn spindle, an electronic device and a storage medium, relating to the technical field of chemical fiber intelligent manufacturing. The method includes: monitoring (S201) whether a control button of a first PLC is in an offline mode and whether a control button of a second PLC corresponding to a target station is in an online mode; and storing (S202) offline data to an offline cache area if the first PLC generates station-passing indication information for the target station, responsive to determining that the control button of the first PLC is in the offline mode and the control button of the second PLC corresponding to the target station is in the online mode.

## Description

### TECHNICAL FIELD

The disclosure relates to the technical field of intelligent manufacturing of chemical fiber, and in particular, to a method and apparatus for controlling automatic station-passing of yarn spindle, an electronic device, and a storage medium.

### BACKGROUND

In the field of chemical fiber production, an efficiently operating production line is crucial for ensuring productivity and efficiency. The production line densely distributes a plurality of precisely coordinated stations. Of particular importance is the smooth flow of multiple yarn spindles through the production line. The speed of the yarn spindles passing a station directly impacts overall production pace and efficiency, which has become a significant bottleneck in improving output capacity. Therefore, achieving rapid station-passing of the yarn spindles in the production line remains a key challenge to be addressed in current innovations within chemical fiber manufacturing technology.

### SUMMARY

The present disclosure provides a method and apparatus for controlling automatic station-passing of yarn spindle, an electronic device, and a storage medium.

According to a first aspect of the disclosure, provided is a method for controlling automatic station-passing of a yarn spindle, applied to a system for controlling automatic station-passing of the yarn spindle, where the system for controlling automatic station-passing of the yarn spindle includes: a Manufacturing Execution System (MES), a first Programmable Logic Controller (PLC), and a plurality of second PLCs, where one of the plurality of second PLCs is responsible for controlling at least one station; the plurality of second PLCs are connected to the first PLC, and the first PLC is connectable to the MES; the method for controlling automatic station-passing of the yarn spindle includes:
monitoring whether a control button of the first PLC is in an offline mode and whether a control button of a second PLC corresponding to a target station is in an online mode; and
storing offline data to an offline cache area if the first PLC generates station-passing indication information for the target station, responsive to determining that the control button of the first PLC is in the offline mode and the control button of the second PLC corresponding to the target station is in the online mode, where the offline data is a station-passing record which is stored when the first PLC and the MES are disconnected and which needs to be synchronized to the MES; where the station-passing indication information is permission for station-passing.

According to a second aspect of the disclosure, provided is an apparatus for controlling automatic station-passing of a yarn spindle, applied to a system for controlling automatic station-passing of the yarn spindle, where the system for controlling automatic station-passing of the yarn spindle include: a Manufacturing Execution System (MES), a first Programmable Logic Controller (PLC), and a plurality of second PLCs, where one of the plurality of second PLCs is responsible for controlling at least one station; the plurality of second PLCs are connected to the first PLC, and the first PLC is connectable to the MES; the apparatus for controlling automatic station-passing of the yarn spindle includes:
a monitoring module, configured to monitor whether a control button of the first PLC is in an offline mode and whether a control button of a second PLC corresponding to a target station is in an online mode; and
a first control module, configured to store offline data to an offline cache area if the first PLC generates station-passing indication information for the target station, responsive to determining that the control button of the first PLC is in the offline mode and the control button of the second PLC corresponding to the target station is in the online mode, where the offline data is a station-passing record which is stored when the first PLC and the MES are disconnected and which needs to be synchronized to the MES; where the station-passing indication information is permission for station-passing.

According to a third aspect of the disclosure, provided is an electronic device, including:
at least one processor; and
a memory connected in communication with the at least one processor,
where the memory stores an instruction executable by the at least one processor, and the instruction, when executed by the at least one processor, enables the at least one processor to execute the method of any embodiment of the present disclosure.

According to a fourth aspect of the disclosure, provided is a non-transitory computer-readable storage medium storing a computer instruction thereon, where the computer instruction is used to cause a computer to execute the method of any embodiment of the present disclosure.

According to the technology of the disclosure, the automatic management of caching the offline station-passing record of the yarn spindles can be realized, thereby improving the station-passing efficiency of the yarn spindles.

It should be understood that the statements in this section are not intended to identify key or critical features of the embodiments of the present disclosure, nor are they intended to limit the scope of the present disclosure. Other features of the present disclosure will become apparent from the following description.

### BRIEF DESCRIPTION OF THE DRAWINGS

The above and other features, advantages and aspects of embodiments of the present disclosure will become more apparent with reference to the following detailed description in conjunction with the accompanying drawings. In the drawings, like or similar reference characters designate like or similar elements, in which:
FIG. 1 is a structural diagram schematically illustrating a system for controlling automatic station-passing of a yarn spindle according to an embodiment of the present disclosure;
FIG. 2 is a flowchart schematically illustrating a method for controlling automatic station-passing of a yarn spindle according to an embodiment of the present disclosure;
FIG. 3 is a flowchart schematically illustrating a process of a first PLC caching offline data according to an embodiment of the present disclosure;
FIG. 4 is a flowchart schematically illustrating a process of the first PLC returning offline compulsory station-passing indication information to a second PLC after caching the offline data according to an embodiment of the present disclosure;
FIG. 5 is a structural block diagram schematically illustrating an apparatus for controlling automatic station-passing of a yarn spindle according to an embodiment of the present disclosure; and
FIG. 6 is a block diagram schematically illustrating an electronic device for implementing the method for controlling automatic station-passing of the yarn spindle according to the embodiment of the present disclosure.

### DETAILED DESCRIPTION

Exemplary embodiments of the present disclosure will be described below with reference to the accompanying drawings, in which various details of the embodiments of the present disclosure are included to assist understanding, and which are to be considered as merely exemplary. Accordingly, an ordinary person skilled in the art will recognize that various changes and modifications of the embodiments described herein can be made without departing from the scope of the disclosure. Also, descriptions of well-known functions and structures are omitted in the following description for clarity and conciseness.

The terms "first", "second" and "third" in the embodiments and claims of the description of the present disclosure and the above-described drawings are used for distinguishing between similar elements and not necessarily for describing a particular sequential or chronological order. Furthermore, the terms "comprise" and "have" as well as any variations thereof are intended to cover a non-exclusive inclusion, such that a list of steps or elements is included. The method, system, product or apparatus need not be limited to the explicitly listed steps or elements, but may include other steps or elements not expressly listed or inherent to the process, method, product or apparatus.

Before the technical solutions of the embodiments of the present disclosure are introduced, technical terms that may be used in the present disclosure will be further described:

MES: a software system for monitoring and managing a manufacturing process that enables real-time collection, processing and analysis of production data and optimization of production planning and resource allocation.

PLC: an industrial digital computer used for controlling automatic equipment, such as mechanical devices and robots on a production line, which can carry out logic operation and processing on an input signal according to a preset program and output a control signal to control the operation of equipment.

Operational data: operation-related data generated during the manufacturing process, such as device status, product quantity, production schedule, which are basis for the MES and PLC to make decision and control.

Station-passing indication information (also called station-passing instruction): instruction and parameter information generated by the MES with the analysis of the operational data for guiding equipment to execute a station-passing task.

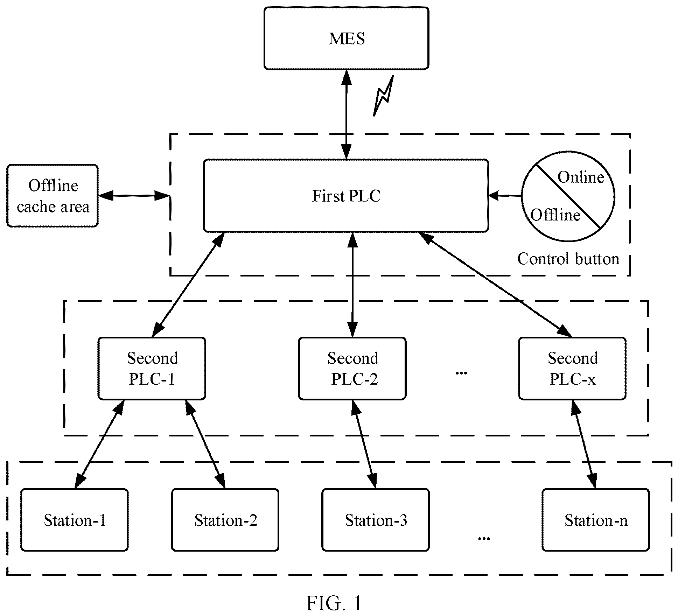

FIG. 1 is a diagram schematically illustrating a system for controlling automatic station-passing of a yarn spindle. As shown in FIG. 1, the system for controlling automatic station-passing of the yarn spindle includes an MES (Manufacturing Execution System), a first PLC (Programmable Logic Controller) and a plurality of second PLCs, where the plurality of second PLCs are connected to the first PLC, the first PLC is connectable to the MES, and one of the plurality of second PLCs is responsible for controlling at least one station. The second PLC is mainly responsible for collecting and processing real-time operational data of a target station and providing the real-time operational data to the first PLC for use. The first PLC is responsible for interacting with the second PLC and acquiring second operational data from the second PLC; the first PLC is also responsible for interacting with the MES, sending first operational data to the MES, receiving the station-passing indication information issued from the MES based on the first operational data, and further informing the second PLC of executing the station-passing indication information for the target station.

In some implementations, the MES is configured to determine the station-passing indication information for the target station based on the first operational data sent from the first PLC and return the station-passing indication information to the first PLC.

In some implementations, the first PLC is configured to obtain the first operational data for the target station according to second operational data for the target station obtained from the second PLC.

In some implementations, one of the second PLCs is configured to obtain and store the second operational data of the target station managed and controlled by the second PLC.

Here, the first operational data is a data set, collected and processed by the first PLC, including information on the real-time status of the target station, the processing progress of the yarn spindle, the quality test result of the yarn spindle, the request type, for example. The data is of significant importance for monitoring the operational status of the production line and making a decision as to whether to allow the yarn spindle to pass through the station.

Here, the second operational data is a data set, collected and processed by the second PLC, including information on the real-time status of the target station, the processing progress of the yarn spindle, the quality test result of the yarn spindle, the bar code of the yarn spindle. The data is of significant importance for monitoring the operational status of the production line.

According to the system for controlling automatic station-passing of the yarn spindle, the MES, the first PLC and the second PLC are communicated in real time and process the data, so that the MES can monitor the status of the stations in real time and make adjustment and optimization as required. Through the automatic control, the manual intervention is reduced and the efficiency and the accuracy of the station-passing of the yarn spindle are improved; the material waste and the downtime caused by human errors are reduced, and the cost of the production is lowered. Through the automatic control, the stability and the consistency of the yarn spindle in the process of station-passing are ensured, and the pace and the efficiency of the whole production are favorably improved. By using first PLC as an intermediate layer of the MES and the second PLCs, the system for controlling automatic station-passing of the yarn spindle has remarkable advantages in aspects of centralized management, data integration, MES burden lightening, system expandability enhancement, safety and stability improvement, network structure simplification and the like.

If the MES communicates directly with the plurality of second PLCs, the MES will need to process a large amount of real-time data and requests, which can burden the MES and affect its performance. By using the first PLC as an intermediate layer, the MES only needs to communicate with the first PLC, thereby reducing the processing load of the MES. Without the first PLC as an intermediate layer, the MES needs to establish a direct communication connection with each second PLC, which may result in complex and unmanageable network architecture. The network structure can be greatly simplified by transferring through the first PLC, so that the whole communication process becomes clearer and more orderly. The first PLC can act as a security barrier to verify and filter data from the second PLC to prevent malicious or erroneous data from entering the MES system. Meanwhile, the redundancy and fault-tolerant mechanism of the first PLC can improve the stability and reliability of the system, ensuring that the normal operation of the production line can be maintained when partial equipment fails.

As the production line expands and upgrades, more second PLCs may need to be added. If the MES communicates directly with each second PLC, corresponding configuration and modification of the MES will be required for each extension. By using the first PLC as the intermediate layer, only support for a new second PLC needs to be added in the first PLC, without modifying the MES configuration. The first PLC can receive the operational data from the second PLCs in a centralized manner and perform unified processing and analysis, thereby making the control of the entire production line more centralized and organized and reducing the complexity and the disorder of direct communication between the MES and the second PLCs. The first PLC can integrate data from the different second PLCs to form a more comprehensive production view, which enables the MES to make a decision based on the more comprehensive data to optimize production planning and resource allocation. Meanwhile, the first PLC can also preprocess and filter the data, thereby reducing the amount of data transmitted to the MES and improving the communication efficiency.

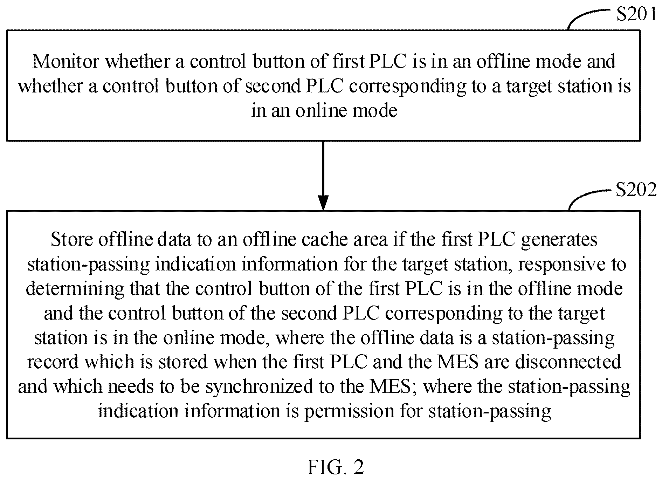

An embodiment of the disclosure provides a method for controlling automatic station-passing of a yarn spindle, and FIG. 2 is a flowchart schematically illustrating the method for controlling automatic station-passing of the yarn spindle according to the embodiment of the present disclosure. The method for controlling automatic station-passing of the yarn spindle can be applied to an apparatus for controlling automatic station-passing of the yarn spindle which is disposed on an electronic device applied to a system for controlling automatic station-passing of the yarn spindle. The electronic device includes, but is not limited to, a stationary device and/or a mobile device. For example, the stationary device includes, but is not limited to, a server, which may be a cloud server or a general server. For example, the mobile device includes, but is not limited to, a mobile phone, a tablet computer, a notebook a computer. In some possible implementations, the method for controlling automatic station-passing of the yarn spindle can also be realized by invoking a computer readable instruction stored in a memory through a processor. As shown in FIG. 2, the method for controlling automatic station-passing of the yarn spindle includes steps of:
S201: monitoring whether a control button of the first PLC is in an offline mode and whether a control button of a second PLC corresponding to a target station is in an online mode; and
S202: storing offline data to an offline cache area if the first PLC generates station-passing indication information for the target station, responsive to determining that the control button of the first PLC is in the offline mode and the control button of the second PLC corresponding to the target station is in the online mode, where the offline data is a station-passing record which is stored when the first PLC and the MES are disconnected and which needs to be synchronized to the MES; where the station-passing indication information is permission for station-passing.

In some implementations, the first PLC has two working modes: in the online mode, the first PLC maintains a connection to the MES and synchronizes data to the MES in real time; and in the offline mode, the first PLC is disconnected from the MES and unable to synchronize the data to the MES in real time.

In some implementations, the second PLC has two working modes: in the offline mode, the second PLC requests for compulsory station-passing; in the online mode, the second PLC executes the station-passing processing according to the station-passing indication information (permission for station-passing or prohibition for station-passing) sent from the MES or the first PLC.

In some implementations, the offline cache area is a temporary storage area for storing the data generated by the first PLC in the offline mode that needs to be synchronized to the MES.

In some implementations, the system detects whether the working mode of the first PLC is in the offline mode while detecting whether the second PLC corresponding to the target station is in the online mode. This step ensures the accuracy and timeliness of the data synchronization.

In some implementations, when the first PLC is in the offline mode and the second PLC is in the online mode, offline data is stored to the offline cache area if the first PLC generates the station-passing indication information (i.e., permission for station-passing) for the target station. The first PLC stores the station-passing record (the offline data) that needs to be synchronized to the MES into the offline cache area. The offline data includes, but is not limited to, the serial number of the yarn spindle, target station information, and station-passing time, for example. When the first PLC is reconnected to the MES or the time point set by the system arrives, the offline data in the offline cache area is synchronized to the MES, thereby ensuring the integrity and the consistency of the data. After the synchronization is completed, status information of the related yarn spindle in the MES, including the position and the processing progress thereof, is updated for subsequent production management and scheduling.

According to the technical scheme of the embodiment of the disclosure, in the case where a control button of the first PLC is in the offline mode and a control button of the second PLC corresponding to the target station is in the online mode, if the first PLC generates station-passing indication information for the target station, the offline data is stored in the offline cache area; therefore, even if the first PLC is disconnected from the MES, the offline cache mechanism can ensure the temporary storage and subsequent synchronization of important data, thereby improving the efficiency and reliability of data synchronization. When the first PLC is in the offline mode, the station-passing indication information can still be generated for the target station and the integrity of data is ensured through an offline cache mechanism, thereby reducing the production interruption caused by the data synchronization problem.

In some embodiments, the storing of the offline data to the offline cache area if the first PLC generates the station-passing indication information for the target station includes: firstly sending the station-passing indication information to the second PLC corresponding to the target station, controlling the target station to execute a yarn spindle station-passing task based on the station-passing indication information by the second PLC, and then storing the offline data to the offline cache area.

In some implementations, when the first PLC decides to generate the station-passing indication information for the target station, the information is firstly sent to the second PLC that directly corresponds to the target station via a network or communication line. After receiving the station-passing indication information, the second PLC controls the target station to execute a corresponding yarn spindle station-passing task based on a preset logic and rule.

In some implementations, the first PLC, when or after sending the station-passing indication information, stores the offline data (e.g., a yarn spindle identifier, station-passing time, and target station information, etc.) in relation to the station-passing operation in the offline cache area. The offline data is critical information that needs to be synchronized to the MES for subsequent restoration of the connection when the first PLC is disconnected from the MES or cannot synchronize data in real time.

As such, by sending the station-passing indication information and then storing the offline data, continuous operation of the production line and temporary storage of the data can be guaranteed even if the first PLC is disconnected with the MES, thereby enhancing flexibility and reliability of the system. When the first PLC is reconnected to the MES, the stored offline data can be rapidly obtained and synchronized from the offline cache area, thereby reducing the possibility of data loss and repeated work and improving the efficiency of data synchronization. By timely sending the station-passing indication information and storing the offline data, it can be ensured that various links in the production flow are closely connected, thereby avoiding production stagnation or delay caused by waiting for data synchronization.

In some embodiments, if the storing of the offline data to the offline cache area if the first PLC generates the station-passing indication information for the target station includes: firstly storing the offline data to the offline cache area, and then sending the station-passing indication information to the second PLC corresponding to the target station.

In some implementations, when the first PLC decides to generate the station-passing indication information for the target station, the offline data in relation to the station-passing operation is first stored in the offline cache area. This is to ensure that critical production data can be saved even in the event of the disconnection from the MES or failure to synchronize data in real time.

In some implementations, after storing the offline data, the first PLC may send the station-passing instruction information to the second PLC corresponding to the target station via the network or the communication line. This step is to allow the second PLC to control the target station to execute the yarn spindle station-passing task based on the information.

As such, the way of storing the offline data and then sending the station-passing indication information ensures that the offline data cannot be lost even if communication failure or interruption occurs in the process of sending the indication information, thereby improving the safety of the data. By storing the critical data and then triggering the next step of the production flow, it can be ensured that the data flow on the production line is consistent with the real material flow, thereby reducing the production delay or error caused by data asynchronism. The implementation allows the system to still maintain a certain production capacity when facing with emergencies such as network failure or system maintenance, thereby enhancing the flexibility and toughness of the system.

In some implementations, the second PLCs collect and process relevant second operational data (e.g., the position, status and quantity of the yarn spindle) based on the status of respective controlled stations, and the data is stored in a data storage area, such as a Data Block (DB), allocated by the second PLC for its responsible station.

In some implementations, the first PLC obtains the second operational data for the respective station from the second PLC and generates the first operational data for the stations. The first operational data contain information about the status and required operations of all the relevant stations. The MES analyzes the first operational data and determines the station-passing indication information of the target station (namely, the station which needs to execute the yarn spindle station-passing task currently). The station-passing indication information includes permission of station-passing or prohibition of station-passing. When the station-passing indication information is the permission of station-passing, the station-passing indication information can also include parameters such as specific time, target position and speed of station-passing. The MES transmits the station-passing indication information as generated to the first PLC via the network or other communication manners such as a Management Interface (MI).

In some implementations, after receiving the station-passing indication information from the MES, the first PLC performs parsing processing to extract a specific control instruction and parameter. After finishing the parsing, the first PLC sends a parsing result (namely, the specific control instruction and parameter) to the second PLC corresponding to the target station through a communication interface or a communication protocol. After receiving the parsing result, the second PLC controls station-passing equipment such as a mechanical device or a robot of the target station to execute the yarn spindle station-passing task according to the control instruction and parameter in the parsing result.

In some implementations, at the time of system start-up, the communication protocol and parameter between the first PLC and the second PLC are configured to ensure stable communication therebetween. The connection between the first PLC and the MES is configured to ensure that the first PLC can send the first operational data to the MES and receive the station-passing indication information returned by the MES. The first PLC actively acquires the second operational data (such as the current working status, the number of the yarn spindles to be processed, and the processing time) of the target station from a second PLC corresponding to the target station. After acquiring the second operational data, the first PLC converts the second operational data into the first operational data (e.g., whether a station-passing condition is met, and a predicted station-passing time) according to a preset algorithm or logic. If the connection between the first PLC and the MES is disconnected for any reasons (e.g., network failure and MES maintenance), the first PLC will automatically switch to an offline working mode. In this mode, the first PLC records the first operational data and sends the station-passing indication information (e.g., a "permission for station-passing" signal) to the second PLC. After receiving the station-passing indication information, the second PLC controls the target station to execute a yarn spindle station-passing task, including moving the yarn spindle to the next station, and updating the status information, for example. Once the connection between the first PLC and the MES is restored, the system can automatically synchronize the data and adjust subsequent operations according to the up-to-date instructions of the MES.

For example, it is assumed that the production line has a plurality of stations, one of which is responsible for a different processing task. The first PLC regularly obtains the second operational data of the current station from the second PLC. After the processing of the yarn spindle at a certain station (such as a weighing station) is finished, the yarn spindle will enter into the next procedure. At this point, if the MES is temporarily unavailable, the first PLC will send station-passing indication information of "permission for station-passing" to the second PLC in place of the MES. Subsequently, the second PLC sends an instruction to station-passing equipment (such as a conveyor belt or a robot) to convey the processed yarn spindle to the next station (such as a coil diameter measuring station) for subsequent processing.

The main type of the yarn spindle involved in the scheme of the embodiments of the disclosure can include one or more of Partially Oriented Yarns (POY), Fully Drawn Yarns (FDY), or Draw Textured Yarns (DTY) (or called low stretch yarns). For example, the type of the yarn can specifically include Polyester Partially Oriented Yarns, Polyester Fully Drawn Yarns, Polyester Drawn Yarns, Polyester Draw Textured Yarns and Polyester Staple Fiber (PSF).

According to the technical scheme of the embodiment of the disclosure, the MES can monitor the status of the stations in real time through real-time communication and data processing among the MES, the first PLC and the plurality of second PLCs, and adjust and optimize the station-passing strategy on demand. Even under the condition that the first PLC is disconnected from the MES, the system can independently run and complete the station-passing task, thereby enhancing the stability and the reliability of the system. Through automatic offline compulsory station-passing control, manual intervention is reduced, the speed and accuracy of the yarn spindle station-passing are increased, and the production cost and the time cost caused by manual errors or delay are lowered.

In the embodiment of the disclosure, the second PLC controls the target station to execute the yarn spindle station-passing task based on the station-passing indication information, including: under the condition that the station-passing indication information is permission for station-passing, informing, through the second PLC, the station-passing equipment or directly controlling the station-passing equipment to convey the processed yarn spindle at the target station to the next station of the target station.

Here, the station-passing equipment refers to an automatic device, such as a conveying belt, a mechanical arm, and an automatic carrying trolley, used for realizing the transfer of materials (such as yarn spindles) between different stations on the production line. The above is merely an exemplary illustration and should not be construed as a limitation on all potential devices of the station-passing equipment, which are not exhaustively listed here.

In some implementations, the station-passing indication information may include an evaluation result of the first PLC on whether the yarn spindle at the target station meets the station-passing condition, for guiding a subsequent control operation.

In some implementations, when the station-passing indication information is "permission for station-passing", the second PLC sends an instruction or signal to the station-passing equipment to inform the station-passing equipment to prepare to convey the processed yarn spindle at the target station. After receiving the instruction from the second PLC, the station-passing equipment can convey the yarn spindle from the target station to the next station based on a preset program or path. In the process of conveying, a series of actions on the yarn spindle such as gripping, handling and placing may be involved, all of which need to be precisely controlled to ensure safe and accurate conveying of the yarn spindle.

In some implementations, the second PLC continuously monitors the operational status of the station-passing equipment and the conveying condition of the yarn spindle. Once the conveying is finished, the station-passing equipment will send a feedback signal to the second PLC, confirming that the current yarn spindle has successfully arrived at the next station. The second PLC updates the internal status based on the feedback signal to prepare for the subsequent control operation.

For example, it is assumed that the production line has a plurality of stations, one of which is responsible for a different processing task. After the processing of the yarn spindle at a certain station (such as a weighing station) is finished, the second PLC receives a parsing result of the station, and determines "permission for station-passing" as long as a compulsory station-passing variable =1 regardless of whether the parameters such as weight, specification and batch number meet requirements or not. Subsequently, the second PLC sends an instruction to the station-passing equipment (such as the conveying belt or the robot) to convey the processed yarn spindle to the next station (such as a coil diameter measuring station) for subsequent processing.

As such, the process of passing the yarn spindle through the station can be accurately controlled through the first PLC and the plurality of second PLCs, thereby reducing the waiting time and the manual intervention and improving the overall efficiency of the production line; reducing errors caused by human factors, and improving the stability and the reliability of the production process. The PLC is flexible in programming, can quickly adjust control logic according to production requirements, and is suitable for processing different types and specifications of yarn spindles. The first PLC supports the compulsory station-passing, such that dwell time of the yarn spindle at the station can be significantly shorten to promote the whole smoothness of production line while effectively reducing energy consumption and human cost.

In the embodiment of the disclosure, the method for controlling the automatic station-passing of the yarn spindle further includes: determining that the first PLC and the MES are disconnected when the first PLC detects that the control button corresponding to the first PLC rotates to the offline mode.

In some implementations, the offline mode generally refers to a status in which the system is operating independently without communication with a superior management system (e.g., MES). In this mode, the system can rely on its own logic and preset parameters to execute the control task.

In some implementations, the control button is a physical switch or knob for controlling a working mode of the first PLC, which is used to switch the working mode (e.g., online mode or offline mode) of the first PLC. The offline mode is a specific location or marker on the control button which, when the button is rotated to that position, indicates a selection of the offline mode to actively interrupt the communications with the MES. The online mode is a specific location or marker on the control button which, when the button is rotated to that position, indicates a selection of the online mode to desirably maintain the communication with the MES.

In some implementations, the first PLC continuously monitors a status of a control button directly connected thereto, and the button is typically mounted on a control panel, allowing an operator to manually switch the working mode of the first PLC. When detecting that the control button has been rotated to the "offline mode" position, the first PLC immediately records this event and assumes that the connection to the MES has been disconnected or is about to be disconnected. It should be noted that this detection mode is mainly dependent on hardware signals (e.g., ON/OFF status of the button), and is therefore instantaneous and reliable. After the offline mode is determined, the first PLC obtains the second operational data of the target station from the second PLC according to an established flow and converts the second operational data into first operational data. Based on the processed first operational data, the first PLC judges whether to send the station-passing indication information to the second PLC so as to control the yarn spindle station-passing task. Generally, the first PLC will send station-passing indication information of "permission for station-passing" to the second PLC. The system should have the capability to handle various exception conditions and automatically synchronize data or restore the connection with the MES when the condition is restored.

Taking an automatic packaging line in the chemical fiber industry as an example, the MES may not communicate with the first PLC temporarily due to a network failure. At this point, an operator may walk up to a control panel of the first PLC, and rotate the control button to "offline mode". When the change is detected, the first PLC may automatically determine that the connection with the MES is disconnected, and immediately starts the station-passing control flow in the offline mode. Subsequently, the first PLC sends the station-passing indication information of "permission for station-passing" to the second PLC, ensuring that the yarn spindle can smoothly move from the current station to the next station.

As such, by introducing the control button, the operator is allowed to directly intervene in the production flow under a specific condition, improving the flexibility of the system and the capability of coping with emergencies. By allowing the operator to manually switch the working mode of the first PLC, the system can quickly adjust the operating status according to an actual requirement, enhancing the flexibility and the adaptability of the system. The status detection of the control button provides visual indication for the connection status between the first PLC and the MES and is beneficial to timely finding and processing connection problems, thereby improving the reliability of the system. In the event that the MES is unavailable, the operator can switch the first PLC to the offline mode by simply rotating the control button to allow the system to continuously execute the station-passing task, thereby simplifying the operational flow and reducing down time.

In the embodiment of the disclosure, the method for controlling the automatic station-passing of the yarn spindle further includes: determining that the first PLC and the MES are disconnected when the first PLC detects that the communication between the first PLC and the MES is interrupted.

In some implementations, the communication interruption refers to a status in which a communication link cannot normally transmit data for any reasons (such as network failure, equipment failure, and signal interference) during the communication.

In some implementations, the first PLC internally integrates a communication status monitoring module which continuously monitors the communication link with the MES. The monitored contents include, but are not limited to, key indexes such as success rate of sending and receiving data packet, communication delay, and timeout times. When it is monitored that the communication link is abnormal (such as failure of sending continuous data packets, communication delay exceeding a preset threshold, and timeout times reaching an upper limit), the communication is determined to be interruption. Once the communication is determined to be interruption, the first PLC immediately records this event and assumes that the connection with the MES has been disconnected. Subsequently, the first PLC will switch to an offline working mode. In the offline working mode, the first PLC continuously obtains the second operational data of the target station from the second PLC and converts the second operational data into the first operational data. Based on the processed first operational data, the first PLC judges whether to send the station-passing indication information to the second PLC so as to control the station-passing task of the yarn spindle. When it is detected that the communication link with the MES is restored to be normal, the first PLC automatically switches to an online working mode; in the online working mode, the first PLC and the MES synchronously operate to ensure the consistency and accuracy of data.

It is assumed that the first PLC on the automatic production line is responsible for monitoring and managing the operating status of a plurality of yarn spindle processing stations. Someday, the communication link between the first PLC and the MES is disconnected due to the network failure. The communication status monitoring module of the first PLC immediately detects the abnormality and determines that the communication is interrupted. Subsequently, the first PLC automatically switches to the offline working mode, continuously obtains the operational data from the second PLC and controls the station-passing task of the yarn spindle. When the network failure is resolved and the communication link is restored to be normal, the first PLC and the MES synchronously operate once more to ensure the consistency and accuracy of data.

As such, by automatically detecting communication interruption and switching to the offline working mode, the system can continuously execute the control task when the MES is unavailable without the manual intervention, thereby improving the automation degree of the system. The automatic detection and processing mechanism of the communication interruption enables the system to cope with various communication faults, thereby improving the stability and reliability of the system. After the communication is restored, the system can automatically synchronize data and restore to a normal working status, thereby reducing downtime caused by the communication problem.

In the embodiment of the disclosure, the method for controlling the automatic station-passing of the yarn spindle further includes: not performing, by the MES, judgment processing for an online station-passing condition responsive to determining that the first PLC and the MES are disconnected.

In some implementations, when the communication between the MES and the underlying control system is interrupted, the MES adopts a series of alternative processing measures to maintain normal system operation, and these measures may not rely on real-time data.

In some implementations, the judgment processing for the online station-passing condition includes: a process where the MES evaluates and analyzes the received operational data based on a preset rule and algorithm to determine whether the target station is allowed to perform the station-passing operation. The conditions may include a variety of factors such as production schedule, equipment status, and material supply condition.

In some implementations, when receiving the first operational data sent from the first PLC, the MES first performs the reception and preliminary verification of the data. If the data has a correct format and contains effective compulsory station-passing variables, the MES will completely record the data into an internal database or a log system so as to facilitate the follow-up data tracing. The recorded contents may include information about all or part of the key fields of the first operational data and the timestamp of the received data. Under normal circumstances, the MES may perform the judgment processing for the online station-passing condition on the received operational data according to the preset rule and algorithm, in order to determine whether passage through the target station is permitted.

In some implementations, a stable communication link is established between the MES and the first PLC and the status of the link is continuously monitored. When detecting that the communication with the MES is interrupted, the first PLC informs the MES through a preset communication protocol or a heartbeat mechanism. After receiving the notice of the communication interruption from the first PLC, the MES immediately recognizes that the current connection status with the first PLC is disconnected. The MES then stops performing any judgment processing for the online station-passing condition that relies on real-time communication with the first PLC. The MES may initiate an offline processing strategy that may include logging communication interruption events, sending an alert to system administrator, and performing predictive processing to some degree (if applicable) based on the preset rule or historical data. However, in any event, the MES does not perform any judgment processing for the online station-passing condition that requires real-time data collection from the first PLC. When detecting that communication with the MES is restored, the first PLC informs the MES again. After receiving the notice of the communication restoration, the MES reestablishes the communication connection with the first PLC and restores to execute the judgment processing for the online station-passing condition.

Taking an automatic packaging line in the chemical fiber industry as an example, the MES is responsible for monitoring the whole production process and judging whether the yarn spindle meets the station passing condition according to real-time data. However, due to the network failure, the communication between the MES and the first PLC is abruptly interrupted. At this point, the MES immediately stops the judgment processing for the online station-passing condition and records this event through the system log. Meanwhile, the system administrator receives an alarm of communication interruption and immediately starts troubleshooting. After the fault is solved and the communication is restored, the MES reestablishes the connection with the first PLC and continues to execute the judgment processing for the online station-passing condition.

As such, during the communication interruption, the MES does not perform unnecessary judgment for the online station-passing condition, thereby reducing the consumption of computing resources. By avoiding processing that relies on real-time data when the communication is interrupted, potential problems with the system due to data inconsistencies or errors are reduced. The system administrator can timely receive the alarm of communication interruption and intervene according to the requirement, thereby improving the maintainability and the user experience of the system.

In the embodiment of the present disclosure, the judgment processing for the online station-passing condition may include: judging whether the yarn spindle at the target station meets the station-passing condition based on target character string data corresponding to the target station, where the target character string data is obtained by parsing first operational data through the MES; if the station-passing condition is met, determining that the station-passing indication information is permission for station-passing; if the station-passing condition is not met, determining that the station-passing indication information is prohibition for station-passing.

In some implementations, the station-passing indication information is used to indicate whether the yarn spindle on the production line can be passed through to the next station for processing. The station-passing indication information may be "permission for station-passing" or "prohibition for station-passing" according to a judgment result of the station-passing condition.

In some implementations, the MES first receives the first operational data sent from the first PLC. These data typically include status information about the target station on the production line, the processing progress of the yarn spindle, the quality test result, and the number of times the station-passing is requested. A dedicated data parsing module is built inside the MES, which is configured to parse the received first operational data to extract target character string data corresponding to the target station. The target character string data may be encoded to represent a particular working status or attribute.

In some implementations, based on the parsed target character string data, the MES further performs a comparison analysis with a preset station-passing condition. The station-passing condition may include whether the processing quality of the yarn spindle satisfies standard, whether all processing tasks of the current station are completed, and whether the equipment fault or the production abnormality is present, for example. If the yarn spindle at the target station meets all preset station-passing conditions, the MES determines that the station-passing indication information is "permission for station-passing", representing that the yarn spindle can be safely conveyed to the next station for further processing. If the yarn spindle at the target station does not meet any one of the station-passing conditions, the MES determines that the station-passing indication information is "prohibition for station-passing" and possibly triggers a corresponding alarm mechanism to inform field personnel to check and process.

In some implementations, the MES sends the judgement result ("permission for station-passing" or "prohibition for station-passing") as the station-passing indication information to the second PLC or other associated control device via the communication interface. The station-passing equipment executes corresponding control logic, such as starting or stopping the conveying action of the yarn spindle, according to the received station-passing indication information.

Taking an automatic packaging line in the chemical fiber industry as an example, when detecting that the processing of yarn spindle at a certain station (such as a weighing station) is completed, the first PLC may send the first operational data containing status information of the station to the MES. After receiving the data, the MES parses out the target character string data (such as two-dimension code and weight information of the yarn spindle with the station-passing request) and compares the target character string data with the preset station-passing condition (such as whether the weight of the yarn spindle of the specification is within an allowable range, A grade: within the allowable range, B grade: light in weight, and C grade: heavy in weight). If the quality grade of the yarn spindle is A grade, the MES determines that the station-passing indication information is "permission for station-passing" and informs the second PLC to start the conveying action of the yarn spindle; if the quality grade of the yarn spindle is grade B or grade C, the MES determines that the station-passing indication information is "prohibition for station-passing", and triggers an alarm mechanism.

As such, it can be ensured that only the yarn spindle meeting the requirement is continuously conveyed through the parsing of the first operational data and the accurate judgment of the station-passing condition by the MES, thereby improving the accuracy and the reliability of production. The conveying of the yarn spindle which does not meet the station-passing condition is found and prevented in time, so that abnormal conditions in the production process, such as equipment fault and quality problem can be reduced, thereby reducing the production risk. Through automatic judgment and the station-passing indication information, the manual intervention and waiting time can be reduced, thereby improving the overall operation efficiency of the production line.

In the embodiment of the disclosure, obtaining, by the first PLC, the second operational data of the target station from the second PLC corresponding to the target station, includes: regularly obtaining, by the first PLC, the second operational data of the target station from the second PLC.

In some implementations, a timer is provided in the first PLC for controlling a time interval for data collection. The time interval can be adjusted according to the actual requirement of the production line, so that the latest data can be obtained in time while the burden of the system cannot be increased due to over-frequent data exchange. When the timer reaches a set time point, the first PLC sends a data request signal to the second PLC. This signal contains information such as the type of data to be obtained and the identifier of the target station, so that the second PLC can accurately return corresponding data.

In some implementations, after receiving the data request of the first PLC, the second PLC searches its own database or real-time data cache for the second operational data of the target station according to information in the request, and sends the second operational data to the first PLC via the communication interface. The data may include real-time status of the target station, process progress, quality test result, for example.

In some implementations, after obtaining the second operational data, the first PLC may parse and process the second operational data to extract required information for subsequent decision-making or control operations. At the same time, the data may also be used to update relevant data in the MES or generate a report.

As such, by regularly obtaining the second operational data of the target station from the second PLC, the real-time monitoring of the production line status can be realized, thereby ensuring the transparence and traceability of the production process. Based on the real-time data, the MES or the first PLC can discover the abnormal condition in the production process in time and take a corresponding adjustment measure, such as stopping the station-passing and adjusting a process parameter, to improve the production efficiency and the product quality. Through the analysis of historical data and real-time data, powerful support can be provided for optimization and decision-making of the production line, such as prediction of production trend and optimization of production plan.

In some implementations, in the system for controlling the automatic station-passing of the yarn spindle, the first PLC is responsible for generating the first operational data of the target station according to the second operational data of the target station. The data may contain various types of information such as status code, numerical parameter and time stamp. The first PLC is internally configured with a preset data storage format to ensure that the data can be efficiently exchanged and parsed between different PLCs or between the PLC and the MES. The first PLC converts the second operational data according to the preset format. The conversion process may include conversion of data types (e.g., integer to floating point), unification of data units (e.g., millimeter to inch), and decoding of data encodings (e.g., binary conversion). The converted data is the first operational data, which follows the preset data storage format, so as to facilitate the subsequent processing and transmission. The first PLC allocates a dedicated data storage area to the target station on the production line. The first operational data is stored in a data storage area corresponding to the target station. The different variables (such as the status code and the numerical parameter), when stored, are allocated to different fixed addresses in the storage area. When the value of a certain variable needs to be read or modified, the variable can be directly accessed through the corresponding address, thereby improving the data processing efficiency.

As such, the preset data storage format and the format conversion process can ensure the consistency and the accuracy of the data from different sources in the exchange and processing processes. The fixed storage address is allocated to the variable, thereby simplifying the data access and processing process and improving the overall performance of the system. The allocation and format definition of the data storage area have certain flexibility and can be expanded and adjusted according to the actual requirement of the production line.

In some embodiments, the method for controlling the automatic station-passing of the yarn spindle further includes: allocating, by the first PLC, a plurality of offline cache areas and an offline control area for all target stations, where the plurality of offline cache areas are shared by all the target stations, and the offline control area includes relevant data bits and relevant control bits for synchronizing the offline data to the MES.

Here, the offline cache area is a specific area allocated in the first PLC or other storage device for storing data to be synchronized when the communication between the first PLC and the MES is interrupted.

Here, the offline control area is a dedicated area provided in the second PLC, and includes relevant data bits and control bits for controlling the offline data synchronization process.

In some implementations, the first PLC allocates a plurality of shared offline cache areas for all the target stations. The areas are used to store the offline data generated by the stations during the communication interruption between the PLC and the MES, such as the station-passing record and the production parameter.

In some implementations, the first PLC is provided with a dedicated offline control area that contains relevant data bits and control bits for controlling the offline data synchronization process. The data bits and control bits are used to store key information, such as synchronization status, target MES address, and synchronization priority, to ensure accurate and orderly synchronization of the offline data to the MES.

In some implementations, when the communication between the first PLC and the MES is interrupted, the offline data generated by the target station is automatically stored in the shared offline cache area. At the same time, the relevant data bits and control bits in the offline control area are updated to reflect the current synchronization status and priority. Once the communication between the first PLC and the MES is restored, the first PLC will check the status information in the offline control area and decide which offline data needs to be synchronized to the MES based on priority and synchronization policies. The first PLC then sends the offline data from the cache area to the MES according to the preset format and protocol.

In some implementations, after receiving the offline data, the MES will validate and confirm it. Once the data is successfully received and processed, the MES will send a synchronization acknowledgement signal to the first PLC. After receiving the acknowledgement signal, the first PLC updates the status information in the offline control area and clears the synchronized offline data to release the cache space for subsequent use.

As such, by allocating the shared offline cache area for all the target stations, it can be ensured that the key data generated during the communication interruption are properly stored, thereby avoiding the influence of data loss on production. The allocation of the offline control area enables the PLC to flexibly control the synchronization process of the offline data, including the synchronization of priority and target MES address, so as to meet requirements under different production scenes. Once the communication is restored, the PLC can synchronize the offline data to the MES rapidly, thereby ensuring that the management layer can master production status in real time and make quick response to promote the production efficiency. By the synchronization confirmation and clearing mechanism, it can be ensured that the synchronized offline data is deleted from the cache area in time, thereby avoiding excessive storage space resources from being occupied.

Hereinafter, the processing flow of the first PLC, which serves as an intermediate layer between the MES and the second PLC, will be described by taking an example in which an IT-PLC represents the first PLC and an ME-PLC represents the second PLC.

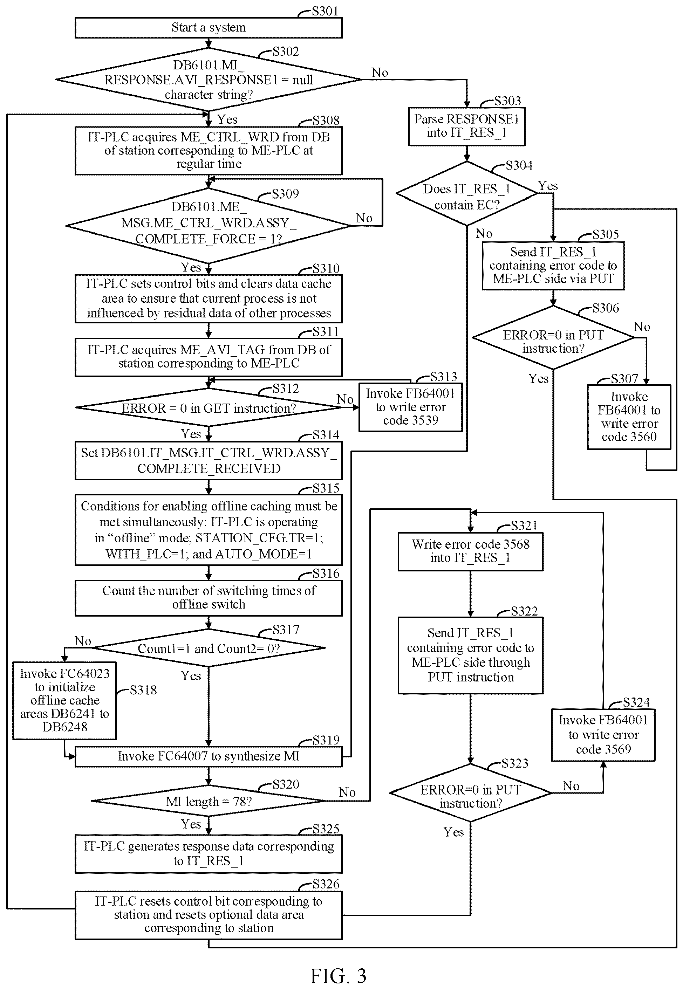

FIG. 3 is a flowchart schematically illustrating a process of a first PLC caching the offline data. As shown in FIG. 3, the process flow includes:
S301: a system is started;
S302: DB6101.MI_RESPONSE.AVI_RESPONSE1 = null character string? If not, the process proceeds to S303, or if yes, the process proceeds to S308;

Here, the reference numeral 6101 is the number of the target station, and DB6101 represents a DB allocated by ME-PLC for the station No. 6101. DB6101.MI_RESPONSE.AVI_RESPONSE1 represents a variable allocated by ME-PLC for the station with the number 6101 to store an MES write response message.

If DB6101.MI_RESPONSE.AVI_RESPONSE1 ≠ null character string, which represents that the previous request has not been completed, then the process proceeds to S303.
S303: IT-PLC parses RESPONSE1 into IT_RES_1, and then the process proceeds to S304;

Here, IT_RES_1 (abbreviated from IT_MSG.UDT_IT_MSG_1.IT_RES_1) represents a storage location where IT-PLC parses response information of MES according to a rule.
S304: Does IT_RES_1 contain an error code? If yes, the process proceeds to S305, or if not, the process proceeds to S319;

Here, EC generally represents Error Code, i.e., the error code.
S305: IT_RES_1 containing the error code is sent to ME-PLC side via a PUT instruction;
S306: ERROR=0 in the PUT instruction? If not, the process proceeds to S307, or if yes, the process proceeds to S326;
S307: FB64001 is invoked to write an error code 3560, then the process returns to S305;

Here, FB64001 is a module integrated with writing of various error codes such as 3560.

Here, the reference numeral 3560 represents that ERROR ≠ 0 in the PUT instruction, i.e., the PUT instruction executed with an error.
S308: IT-PLC acquires ME_CTRL_WRD from the DB of the station corresponding to ME-PLC at regular time.

Here, ME_CTRL_WRD represents a control bit for the target station.

It should be noted that, ME_MSG.ME_AVI_MSG written by ME-PLC into the DB of its corresponding station should be checked on ME-PLC side to ensure the integrity and accuracy of the data.

For example, ME_CTRL_WRD is acquired from DB6101.ME_MSG.ME_CTRL_WRD. Here, 6101 is the number of the target station, and DB6101.ME_MSG represents the DB allocated by ME-PLC for the station No. 6101. DB6101.ME_MSG.ME_CTRL_WRD is the DB allocated by ME-PLC for the station No. 6101 to store a variable of control bits of the station.
S309: DB6101.ME_MSG.ME_CTRL_WRD.ASSY_COMPLETE_FORCE = 1? If yes, the process proceeds to S310, or otherwise, the process repeatedly executes S309;

Here, IT-PLC acquires ME_CTRL_WRD.ASSY_COMPLETE_FORCE from the DB of the station corresponding to ME-PLC.

Here, ME_CTRL_WRD.ASSY_COMPLETE_FORCE=1 represents that ME-PLC is set to start compulsive station-passing.

DB6101.ME_MSG.ME_CTRL_WRD.ASSY_COMPLETE_FORCE is the DB allocated by ME-PLC for the station No. 6101 to store a variable that ME-PLC is set to start compulsive station-passing.
S310: IT-PLC sets of the control bits and clears the data cache area to ensure that the current process is not influenced by residual data of other processes, and then the process proceeds to S311;
S311: IT-PLC acquires ME_AVI_TAG from the DB of the station corresponding to ME-PLC;

For example, ME_AVI_TAG is acquired from DB6101.ME_MSG.ME_AVI_TAG. Here, the reference numeral 6101 is the number of the target station, DB6101.ME_MSG represents the DB allocated by ME-PLC for the station No. 6101, DB6101.ME_MSG.ME_AVI_MSG represents a variable allocated by ME-PLC for the station No. 6101 to store second operational data written by ME-PLC, and ME_MSG.ME_AVI_MSG represents the second operational data written by ME-PLC, such as information on a two-dimensional code of yarn spindle and a request type.

ME_MSG.ME_AVI_TAG written by ME-PLC into the DB of its corresponding station should be checked for correct writing on ME-PLC side.
S312: ERROR = 0 in GET instruction? If not, the process proceeds to S313, or if yes, the process proceeds to S314;

Here, the GET instruction is an instruction to acquire ME_AVI_TAG from the DB of the station corresponding to ME-PLC by IT-PLC.
S313: FB64001 is invoked to write an error code 3539, then the process returns to S311;

Here, FB64001 is a module integrated with writing of various error codes, such as 3539.

Here, the reference numeral 3539 represents ERROR ≠ 0 in the GET instruction.
S314: IT-PLC sets DB6101.IT_MSG.IT_CTRL_WRD.ASSY_COMPLETE_RECEIVED, and then the process proceeds to S315;

Here, DB6101.IT_MSG represents the DB allocated by IT-PLC for the station No. 6101. DB6101.IT_MSG.IT_CTRL_WRD.ASSY_COMPLETE_RECEIVED represents the DB allocated by IT-PLC for the station No. 6101 to store a variable of "IT-PLC acknowledges receipt of a message that ME-PLC is set to start compulsive station-passing".

Here, IT_MSG.IT_CTRL_WRD.ASSY_COMPLETE_RECEIVED represents IT-PLC acknowledges receipt of the message that ME-PLC is set to start compulsive station-passing.
S315: the conditions for enabling offline caching must be met simultaneously: IT-PLC is operating in "offline" mode; STATION_CFG.TR = 1; WITH_PLC = 1; and AUTO_MODE = 1.

Here, the offline condition: the control button of IT-PLC is rotated to the offline mode, or the communication between IT-PLC and MES is interrupted.
STATION_CFG.TR=1 represents that station-passing record is enabled for the current station;
WITH_PLC=1 represents that IT-PLC is in the online mode, that is, the communication between IT-PLC and ME-PLC is normal;
AUTO_MODE=1 represents ME-PLC is in the online mode.

Here, IT-PLC reads AUTO_MODE from DB6101.ME_MSG.ME_CTRL_WRD.AUTO_MODE of ME-PLC.
S316: counting the number of switching times of the offline switch;

Here, Count 1 represents the number of switching times of the offline switch.
S317: Count1=1 and Count2= 0? If not, the process proceeds to S318, or if yes, the process proceeds to S319;

Here, Count2 represents the number of times of offline compulsive station-passing. Count2=0 represents the number of times of offline compulsive station-passing is equal to 0.
S318: FC64023 is invoked to initialize the offline cache areas DB6241 to DB6248, and then the process proceeds to S319;

Here, FC64023 is a module integrated with a function of initializing the offline cache area.

Here, DB6241 to DB6248 are eight DBs allocated by IT-PLC for all DBs to store the offline data. It should be understood that the serial number and the quantity of the DBs characterizing the offline cache areas can be set or adjusted as required.
S319: FC64007 is invoked to synthesize MI;

Here, FC is a customized function module. FC64007 is the number of the function module for synthesizing MI.

Here, MI represents that IT-PLC replaces the response character string generated by MES.
S320: MI length = 78? If not, the process proceeds to S321, or if yes, the process proceeds to S325;

Here, the reference numeral 78 represents a preset length rule of the response character string, and a length of MI needs to satisfy the length rule.
S321: an error code 3568 is written into IT_RES_1, and then the process proceeds to S322;

Here, the reference numeral 3568 represents that the length of the MI generated by IT-PLC is not equal to 78.
S322: IT_RES_1 containing the error code is sent to the ME-PLC side through the PUT instruction, and then the process proceeds to S323;
S323: ERROR = 0 in the PUT instruction? If not, the process proceeds to S324, or if yes, the process proceeds to S326;
S324: FC64017 is invoked to store an offline processed message into the offline cache area;

Here, FC is a customized function module. FC64017 is the number of the function module and is used for storing the offline processed message into the offline cache area.
S325: IT-PLC generates response data corresponding to IT_RES_1;

Here, generating the response data corresponding to IT_RES_1 includes:
DB6101.IT_MSG.UDT_IT_MSG_1.IT_RES_1.RESPONSE_YARN1=DB6101.ME_MSG. ME_AVI_MSG.REQUEST_TARN;
DB6101.IT_MSG.UDT_IT_MSG_1.IT_RES_1.RESPONSE_RESULT=1;
DB6101.IT_MSG.UDT_IT_MSG_1.IT_RES_1.RESPONSE_ERROR=0.

Here, RESPONSE_YARN1 and REQUEST_TARN represent received information of two-dimensional code of the yarn spindle requesting for station-passing.

Here, RESPONSE_RESULT=1 represents that a result of the current station-passing is normal.

Here, RESPONSE_ERROR=0 represents that the error code of the current station-passing is 0. Here, IT_RES_1 constructed in the offline status is normal station-passing information, which mainly constructs to be a correct result (RESPONSE_RESULT) with no error result (RESPONSE_ERROR).
S326: IT-PLC resets the control bit corresponding to the station and resets the optional data area corresponding to the station; and then the process returns to S302.

Here, IT-PLC resetting the corresponding control bit may include:
DB6101.IT_MSG.UDT_IT_MSG_1.IT_CTRL_WRD.ASSY_COMPLETE_RECEIVED=0; and
DB6101.IT_MSG.UDT_IT_MSG_1.IT_CTRL_WRD.MES_COMPLETE=0.

DB6101.IT_MSG represents a data cache area in the DB allocated by ME-PLC for the station No. 6101 to store a plurality of variables.

IT_CTRL_WRD.ASSY_COMPLETE_RECEIVED represents the receipt of the variable that ME-PLC is set to start compulsive station-passing.

IT_CTRL_WRD.MES_COMPLETE represents that IT-PLC notifies ME-PLC that the data processing has been completed.

Here, the IT-PLC resetting the corresponding operational data area includes:
invoking FC64006 to reset DB6101.ME_AVI_MSG;
DB6101.IT_MSG.UDT_IT_MSG_1.IT_RES_1.RESPONSE_YARN1=";
DB6101.IT_MSG.UDT_IT_MSG_1.IT_RES_1.RESPONSE_RESULT=0;
DB6101.IT_MSG.UDT_IT_MSG_1.IT_RES_1.RESPONSE_ERROR=0.

Here, FC64006 is a module integrated with the function for resetting ME_AVI_MSG.

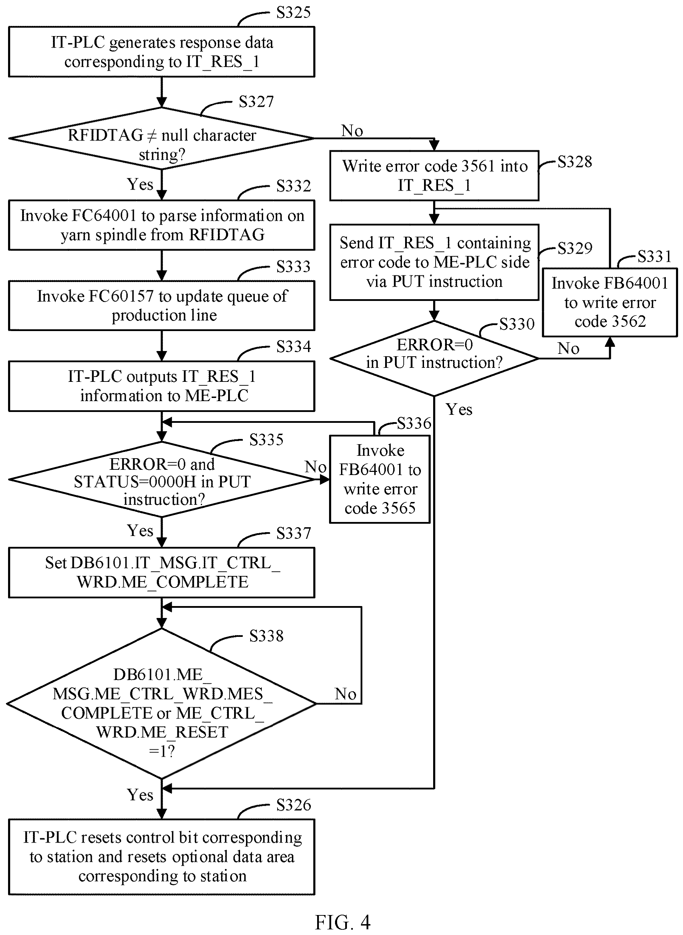

On the basis of FIG. 3, FIG. 4 schematically illustrates a flowchart of a process of the first PLC returning offline compulsory station-passing indication information to a second PLC after caching the offline data. As shown in FIG. 4, the process includes:
S327: RFIDTAG ≠ null character string? If not, the process proceeds to S328, or if yes, the process proceeds to S332;

Here, RFIDTAG ≠ null character string represents that RFIDTAG has yarn spindle data. S328: an error code 3561 is written into IT_RES_1, and then the process proceeds to S329;

Here, the reference numeral 3561 represents that RFIDTAG is null.
S329: IT_RES_1 containing the error code is sent to ME-PLC side via a PUT instruction, and then the process proceeds to S331;
S330: ERROR=0 in the PUT instruction? If not, the process proceeds to S331, or if yes, the process proceeds to S326;
S331: FB64001 is invoked to write an error code 3562, then the process returns to S329;

Here, the reference numeral 3562 represents that RFIDTAG is null and ERROR ≠ 0 in the PUT instruction.
S332: FC64001 is invoked to parse information on the yarn spindle from RFIDTAG;

Here, FC is a customized function module. FC64001 is the number of the function module for parsing the information on the yarn spindle from RFIDTAG.
S333: FC60157 is invoked to update a queue of production line;

Here, FC60157 is a module integrated with the function of updating the queue of production line.
S334: IT-PLC outputs IT_RES_1 information to ME-PLC;
S335: ERROR=0 and STATUS=0000H in PUT instruction? If not, the process proceeds to S336, or if yes, the process proceeds to S337;

Here, ERROR =0 represents that the PUT instruction has no error. STATUS =0000H represents a status value =0, where H represents hexadecimal. The PUT instruction is an instruction for IT-PLC to send data to ME-PLC.
S336: FB64001 is invoked to write an error code 3565;

Here, FB64001 is a module integrated with writing of error codes such as 3565. The reference numeral 3565 represents ERROR≠0 or STATUS≠0000H.
S337: DB6101.IT_MSG.IT_CTRL_WRD.MES_COMPLETE is set;

DB6101.IT_MSG.IT_CTRL_WRD.MES_COMPLETE is the DB allocated by IT-PLC for the station No. 6101 to store a variable that IT-PLC notifies ME-PLC that the data processing has been completed.

Here, IT_MSG.IT_CTRL_WRD.MES_COMPLETE represents that IT-PLC notifies ME-PLC that the data processing has been completed.
S338: DB6101.ME_MSG.ME_CTRL_WRD.MES_COMPLETE or ME_CTRL_WRD.ME_RESET=1? If yes, the process proceeds to S326, or if not, the process repeatedly executes S338;

Here, ME_MSG.ME_CTRL_WRD.MES_COMPLETE=1 represents the variable that IT-PLC notifies ME-PLC that the data processing has been completed is set.

Here, ME_CTRL_WRD.ME_RESET=1 represents that after the yarn spindle at the ME-PLC controlled station has completed the station-passing, the control bits of ME-PLC for the station is set.

Here, the resetting of DB6101.ME_AVI_MSG is intended to allow the continuation of the previous data processing in case of a false trigger of the condition.

It should be noted that the above-mentioned station numbers, error code numbers, DB numbers, variable names, storage address names, FC function module names, and FB function module name are merely exemplary and not restrictive, and can be set or adjusted according to actual requirements.

It should be understood that the schematic diagrams shown in FIGS. 1, 3 and 4 are merely exemplary and not restrictive, and are extensible. Those skilled in the art may make various obvious modifications and/or substitutions based on the examples illustrated in FIGS. 1, 3 and 4, and the resulting technical solutions still fall within the scope of the disclosure of the embodiments of the present disclosure.

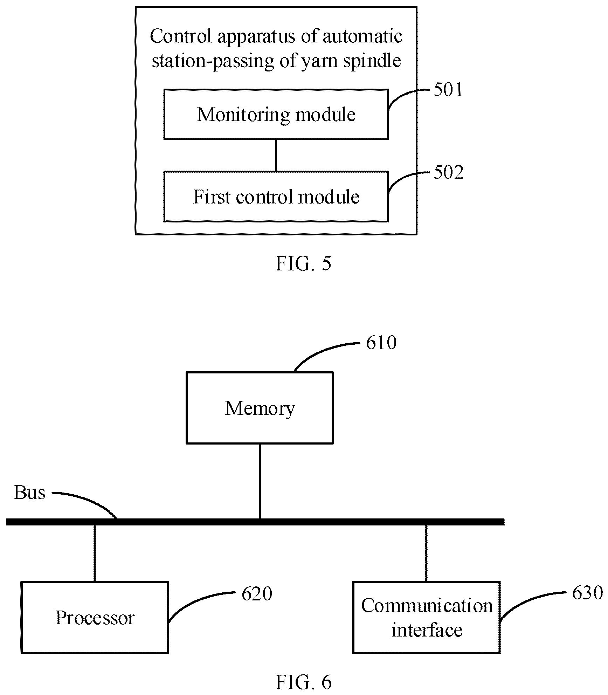

An embodiment of the disclosure provides an apparatus for controlling automatic station-passing of a yarn spindle, which is applied to a system for controlling automatic station-passing of the yarn spindle, where the system for controlling automatic station-passing of the yarn spindle includes an MES, a first PLC and a plurality of second PLCs, the plurality of second PLCs are connected to the first PLC, and the first PLC is connectable to the MES, where one of the plurality of second PLCs is used for controlling at least one station; as shown in FIG. 5, the apparatus for controlling automatic station-passing of the yarn spindle may include: a monitoring module 501, configured to monitor whether a control button of the first PLC is in an offline mode and whether a control button of a second PLC corresponding to a target station is in an online mode; and a first control module 502, configured to store offline data to an offline cache area if the first PLC generates station-passing indication information for the target station, responsive to determining that the control button of the first PLC is in the offline mode and the control button of the second PLC corresponding to the target station is in the online mode, where the offline data is a station-passing record which is stored when the first PLC and the MES are disconnected and which needs to be synchronized to the MES; where the station-passing indication information is permission for station-passing.

In some embodiments, the first control module 502 is configured to firstly send the station-passing indication information to the second PLC corresponding to the target station, control the target station to execute a yarn spindle station-passing task based on the station-passing indication information by the second PLC, and then store the offline data to the offline cache area.

In some embodiments, the first control module 502 is configured to store the offline data to the offline cache area and then send the station-passing indication information to the second PLC corresponding to the target station to execute the yarn spindle station-passing task based on the station-passing indication information by the second PLC.

In some embodiments, the apparatus for controlling automatic station-passing of the yarn spindle further includes a first judgment module (not shown in FIG. 5), configured to determine that the first PLC and the MES are disconnected when the first PLC detects that the control button corresponding to the first PLC rotates to the offline mode.

In some embodiments, the apparatus for controlling automatic station-passing of the yarn spindle further includes a second judgment module (not shown in FIG. 5), configured to determine that the first PLC and the MES are disconnected when the first PLC detects that the communication between the first PLC and the MES is interrupted.

In some embodiments, the apparatus for controlling automatic station-passing of the yarn spindle further includes a second control module (not shown in FIG. 5), configured such that the MES does not perform judgment processing for an online station-passing condition responsive to determining that the first PLC and the MES are disconnected.

In some embodiments, the apparatus for controlling automatic station-passing of the yarn spindle further includes a third control module (not shown in FIG. 5), configured to judge whether the yarn spindle at the target station meets the station-passing condition based on target character string data corresponding to the target station; if the station-passing condition is met, determine that the station-passing indication information is permission for station-passing; if the station-passing condition is not met, determine that the station-passing indication information is prohibition for station-passing, where the target character string data are obtained by parsing first operational data through the MES, and where the first operational data is obtained based on second operational data which is operational data obtained by the first PLC from the second PLC corresponding to the target station.

In some embodiments, the apparatus for controlling automatic station-passing of the yarn spindle further includes a fourth control module (not shown in FIG. 5), configured to allocate, by the first PLC, a plurality of offline cache areas and an offline control area for all target stations, where the plurality of offline cache areas are shared by all the target stations, and the offline control area includes relevant data bits and relevant control bits for synchronizing the offline data to the MES.

It should be understood by those skilled in the art that functions of processing modules in the apparatus for controlling automatic station-passing of the yarn spindle according to the embodiments of the present disclosure may be understood by referring to the foregoing description of the method for controlling automatic station-passing of the yarn spindle. The processing modules in the apparatus for controlling automatic station-passing of the yarn spindle according to the embodiments of the present disclosure may be implemented by an analog circuit that performs the functions of the embodiments of the present disclosure, or may be implemented by running software that performs the functions of the embodiments of the present disclosure on an electronic device.

The apparatus for controlling automatic station-passing of the yarn spindle according to the embodiments of the present disclosure can realize automatic management of caching offline station-passing record of the yarn spindles to improve the efficiency of the station-passing of the yarn spindles.

According to an embodiment of the present disclosure, the disclosure also provides an electronic device and a readable storage medium.

FIG. 6 is a block diagram of an electronic device according to an embodiment of the present disclosure. As shown in FIG. 6, the electronic device includes: a memory 610 and a processor 620, the memory 610 storing therein a computer program operable on the processor 620. The number of the memory 610 and the processor 620 may be one or more. The memory 610 may store one or more computer programs that, when executed by the electronic device, cause the electronic device to perform the methods according to the above-described method embodiments. The electronic device may further include: the communication interface 630 is used for communicating with an external device to perform data interactive transmission.

If the memory 610, the processor 620, and the communication interface 630 are implemented independently, the memory 610, the processor 620, and the communication interface 630 may connect to and communicate with each other through a bus. The bus may be an Industry Standard Architecture (ISA) bus, a Peripheral Component Interconnect (PCI) bus, an Extended ISA (EISA) bus, or the like. The bus may be divided into an address bus, a data bus, a control bus, for example. For sake of illustration, the bus is represented by only one thick line in FIG. 6, but it does not mean only one bus or one type of bus is provided.

Optionally, in an implementation, if the memory 610, the processor 620, and the communication interface 630 are integrated on a chip, the memory 610, the processor 620, and the communication interface 630 may communicate with each other through an internal interface.

It should be understood that the processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, discrete gate or transistor logic device or discrete hardware components, for example. The general-purpose processor may be a microprocessor or any conventional processor. It is noted that the processor may be a processor supporting Advanced RISC Machine (ARM) architecture.

Further, optionally, the memory may include a read-only memory and a random-access memory, and may further include a nonvolatile random-access memory. The memory may be a volatile memory or a nonvolatile memory, or may include both the volatile and the nonvolatile memory. The non-volatile memory may include a Read-Only Memory (ROM), a Programmable ROM (PROM), an Erasable PROM (EPROM), an Electrically EPROM (EEPROM), or a flash Memory. The volatile memory may include a Random-Access Memory (RAM), which acts as an external cache memory. By way of example and not limitation, many forms of RAM are available, such as Static RAM (SRAM), Dynamic Random-Access Memory (DRAM), Synchronous DRAM (SDRAM), Double Data Rate SDRAM (DDR SDRAM), Enhanced SDRAM (ESDRAM), Synchlink DRAM (SLDRAM), and Direct RAMBUS RAM (DR RAM).

The above embodiments may be implemented in whole or in part by software, hardware, firmware, or any combination thereof. When implemented in software, they may be implemented in whole or in part in the form of a computer program product. The computer program product includes one or more computer instruction. The computer instruction, when loaded and executed on a computer, can all or partially generate the flows or functions described in accordance with the embodiments of the disclosure. The computer may be a general-purpose computer, a special purpose computer, a network of computers, or other programmable devices. The computer instruction can be stored in a computer-readable storage medium or transmitted from one computer-readable storage medium to another computer-readable storage medium. For example, the computer instruction can be transmitted from one website, computer, server, or data center to another website, computer, server, or data center via wire (e.g., coaxial cable, fiber optic or Digital Subscriber Line (DSL)) or wireless (e.g., infrared, Bluetooth of microwave). The computer-readable storage medium can be any available medium that can be accessed by a computer or a data storage device, such as a server and a data center, that includes one or more available medium integration. The available medium may be a magnetic medium (e.g., floppy Disk, hard Disk, magnetic tape), an optical medium (e.g., Digital Versatile Disk (DVD)), or a semiconductor medium (e.g., Solid State Disk (SSD)), for example. It should be noted that the computer-readable storage medium referred to in the disclosure can be non-volatile storage medium, i.e., non-transitory storage medium.

It will be understood by those skilled in the art that all or part of the steps for performing the above embodiments may be implemented by hardware, or may be implemented by a program instructing relevant hardware, where the program may be stored in a computer-readable storage medium, and the storage medium may be a read-only memory, a magnetic disk or an optical disk.

In the description of the embodiments of the present disclosure, the description with reference to the terms such as "one embodiment", "some embodiments", "an example", "a specific example" or "some examples" means that a particular feature, structure, material, or characteristic described in connection with the embodiment or example is included in at least one embodiment or example of the present disclosure. Furthermore, the particular features, structures, materials, or characteristics described may be combined in any suitable manner in any one or more embodiments or examples. Moreover, various embodiments or examples and features in various embodiments or examples described in this specification can be combined and grouped by one skilled in the art if there is no mutual conflict.

In the description of the embodiments of the present disclosure, the sign "/" indicates a meaning of "or", for example, A/B indicates a meaning of A or B, unless otherwise specified. The term "and/or" herein is merely an association relationship describing associated objects, and means that there may be three relationships, for example, A and/or B may mean: A alone, both A and B, and B alone.

In the description of the embodiments of the present disclosure, the terms "first" and "second" are used for descriptive purposes only and should not be construed as indicating or implying relative importance or implicitly indicating the number of technical features as indicated. Thus, a feature defined as "first" or "second" may explicitly or implicitly include one or more features. In the description of the embodiments of the present disclosure, "a plurality" means two or more unless otherwise specified.

The above description is intended only to illustrate embodiments of the present disclosure, and should not be taken as limiting thereof, and any modifications, equivalents and improvements made within the principle of the present disclosure will fall within the scope of the present disclosure.

## Claims

1. A method for controlling automatic station-passing of a yarn spindle, applied to a system for controlling automatic station-passing of the yarn spindle, **characterized in that** the system for controlling automatic station-passing of the yarn spindle comprises: a Manufacturing Execution System, MES, a first Programmable Logic Controller, PLC, and a plurality of second PLCs, wherein one of the plurality of second PLCs is responsible for controlling at least one station; the plurality of second PLCs are connected to the first PLC, and the first PLC is connectable to the MES;
the method for controlling automatic station-passing of the yarn spindle comprises:
monitoring (S201) whether a control button of the first PLC is in an offline mode and whether a control button of a second PLC corresponding to a target station is in an online mode; and
storing (S202) offline data to an offline cache area if the first PLC generates station-passing indication information for the target station, responsive to determining that the control button of the first PLC is in the offline mode and the control button of the second PLC corresponding to the target station is in the online mode, wherein the station-passing indication information is permission for station-passing; wherein the offline data is a station-passing record which is stored when the first PLC and the MES are disconnected and which needs to be synchronized to the MES.

2. The method of claim 1, wherein the storing of the offline data to the offline cache area if the first PLC generates the station-passing indication information for the target station comprises:
firstly sending the station-passing indication information to the second PLC corresponding to the target station, controlling the target station to execute a yarn spindle station-passing task based on the station-passing indication information by the second PLC, and then storing the offline data to the offline cache area.

3. The method of claim 1, wherein the storing of the offline data to the offline cache area if the first PLC generates the station-passing indication information for the target station comprises:
firstly storing the offline data to the offline cache area, then sending the station-passing indication information to the second PLC corresponding to the target station, and controlling the target station to execute a yarn spindle station-passing task based on the station-passing indication information by the second PLC.

4. The method of claim 1, wherein the method for controlling automatic station-passing of the yarn spindle further comprises:
determining that the first PLC and the MES are disconnected when the first PLC detects that the control button corresponding to the first PLC rotates to the offline mode.

5. The method of claim 1, wherein the method for controlling automatic station-passing of the yarn spindle further comprises:
determining that the first PLC and the MES are disconnected when the first PLC detects that the communication between the first PLC and the MES is interrupted.

6. The method of claim 4 or 5, wherein the method for controlling automatic station-passing of the yarn spindle further comprises:
not performing, by the MES, judgment processing for an online station-passing condition responsive to determining that the first PLC and the MES are disconnected.

7. The method of claim 6, wherein the judgment processing for the online station-passing condition comprises:
judging whether the yarn spindle at the target station meets the station-passing condition based on target character string data corresponding to the target station; if the station-passing condition is met, determining that the station-passing indication information is permission for station-passing; or if the station-passing condition is not met, determining that the station-passing indication information is prohibition for station-passing, wherein the target character string data are obtained by parsing first operational data of the target station through the MES, and wherein the first operational data is obtained based on second operational data which is operational data obtained by the first PLC from the second PLC corresponding to the target station.

8. The method of claim 1, wherein the method for controlling automatic station-passing of the yarn spindle further comprises:
allocating, by the first PLC, a plurality of offline cache areas and an offline control area for all target stations, wherein the plurality of offline cache areas are shared by all the target stations, and the offline control area includes relevant data bits and relevant control bits for synchronizing the offline data to the MES.

9. An apparatus for controlling automatic station-passing of a yarn spindle, applied to a system for controlling automatic station-passing of the yarn spindle, **characterized in that** the system for controlling automatic station-passing of the yarn spindle comprises: a Manufacturing Execution System, MES, a first Programmable Logic Controller, PLC, and a plurality of second PLCs, wherein one of the plurality of second PLCs is responsible for controlling at least one station; the plurality of second PLCs are connected to the first PLC, and the first PLC is connectable to the MES; the apparatus for controlling automatic station-passing of the yarn spindle comprises:
a monitoring module (501), configured to monitor whether a control button of the first PLC is in an offline mode and whether a control button of a second PLC corresponding to a target station is in an online mode; and
a first control module (501), configured to store offline data to an offline cache area if the first PLC generates station-passing indication information for the target station, responsive to determining that the control button of the first PLC is in the offline mode and the control button of the second PLC corresponding to the target station is in the online mode, wherein the offline data is a station-passing record which is stored when the first PLC and the MES are disconnected and which needs to be synchronized to the MES; wherein the station-passing indication information is permission for station-passing.

10. A non-transitory computer-readable storage medium storing a computer instruction thereon, wherein the computer instruction is used to cause a computer to execute the method of any one of claims 1 to 8.
